# EUROPEAN PATENT APPLICATION

(11) **EP 2 267 944 A1**
(43) Date of publication of application: **29.12.2010**
(21) Application number: 09251235.9
(22) Date of filing: 01.05.2009
(51) Int. Cl.: H04L 12/28, H04M 1/02, H04M 11/06, H04Q 1/02, H04L 12/10, H01R 13/00

(54) **Telecommunications access termination equipment**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A telecommunications network termination equipment 24 for use on customer premises incorporates a transceiver 27 for a data communications service, and a data port 25 for connection to a data communications device such as a computer. This may be in addition to a standard subscriber line interface circuit 28 and analogue terminal adaptor 5 for connection of an analogue telecommunications device.

In the preferred embodiment the equipment forms a detachable front plate 24 for connection to a wall-mounted network termination 1 (Figure 5), with a connection 2, 3, 6 through the wall-mounted unit 1 to the telecommunications network.

## Description

This invention relates to telecommunications access termination equipment, and in particular a termination unit for connection of customer-provided equipment to a metallic telecommunications access network.

Although most telecommunications network operators now incorporate fibre-optic and wireless technology in their core networks, for a significant number of terminations the "final drop" to the customer premises continues to be provided, as it has done for over a century, through a twisted copper wire-pair connecting the customer premises to a distribution point and, ultimately, to the rest of the network. Many users are likely to retain this form of connection for the foreseeable future because of the high logistical cost of replacing this equipment, and advances in wireline access technology such as VDSL2 which enable the existing connections to be used to carry more advanced services.

The electrical interface between the network operator's equipment and the customer's equipment is normally provided by a plug attached to the customer-provided equipment, which connects to a socket in the network termination equipment or "line box" which terminates the access network.

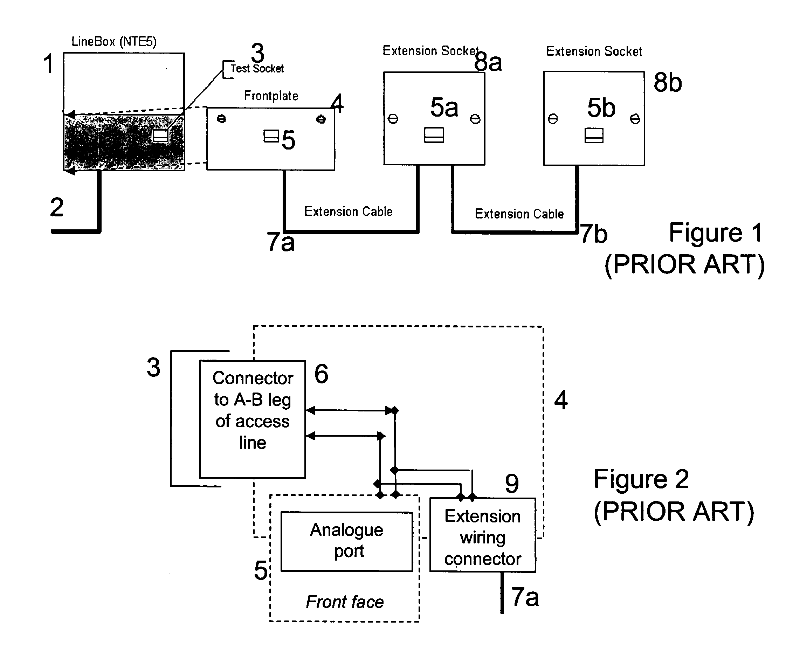

Figures 1, 2 and 3 illustrate a conventional installation. For illustrative purposes a United Kingdom scenario is depicted; other national standards differ in detail but operate on similar principles. The line box comprises a back plate 1 which is attached to an interior wall of a building and has a connection to the fixed network through a "final drop" copper wire pair 2. A front plate 4 is detachably coupled to the back plate 1. The front plate 4 incorporates a socket 5 into which can be connected a telephone instrument via a plug: the UK standard is known as a BT431 A plug. The front plate 4 has provision 9 (Figure 2) for connecting a first extension cable 7a, to serve an extension box 8a having a secondary extension socket 5a, and further extension cables 7b may be provided from the first extension box 8a to further extension boxes 8b.

The front plate 4 is detachable from the back plate 1 to allow access to its interior, for example to allow installation of an extension 7a through an extension wiring connector located on the reverse face of the front plate 4. Electrical connection between the front plate 4 and the back plate 1 is made through a plug 6 on the reverse of the front plate 4 which connects with a socket 3 in the back plate. This socket 3 can be exposed by removal of the front plate 4, to allow a technician to connect test equipment to the line 2 and disconnection of the extension wiring.

Apart from the conventional "plain old telephone service" or "POTS", many other services can be delivered over the existing telephone network. The removable front plate 4 may be replaced by a different front plate to allow connection of different types of equipment requiring a different configuration for the connection 5, for example a Broadband (or ADSL) connection instead of a pure analogue telephony connection.

Many services require the presence of interface functions between the telecommunications network and the customer equipment. In particular, "broadband" connections using the various digital subscriber line (xDSL) standards require the connection of a router or modem between the network and the user's computer or other IT equipment. This adds complexity for the user. The router also requires a power supply, necessitating the provision of an additional electric socket for the router, in addition to any required for the computer itself, and for its peripherals. The added bulk and weight of the necessary interface equipment is particularly inconvenient if used with a supposedly portable computing device.

According to the present invention, there is provided a telecommunications network termination equipment forming the termination of a fixed network connection, the equipment comprising a connection for coupling to a telecommunications network and incorporating a transceiver for a data communications service, and a data port for connection to a data communications device. In a preferred embodiment, the telecommunications network termination equipment further comprises a subscriber line interface circuit and analogue terminal adaptor, and a port for connection of an analogue telecommunications device thereto. The equipment may form a detachable front plate of a wall-mounted network termination, and having cable connection means for connection through a network termination unit to the telecommunications network.

The data port is preferably an Ethernet port. More than one such port may be provided. The equipment may further comprise a power management unit for taking a power supply from the telecommunications network and delivering power to the transceiver and the external data and analogue ports.

Providing these functions in the network termination equipment removes the need for a separate device such as a router modem. The user can plug a computer device such as a personal computer directly into the network termination equipment via the Ethernet data port. If an analogue (POTS) port is also provided, the user may use it to also connect an existing analogue telephone instrument.

The service may be an xDSL service such as VDSL (very high speed digital subscriber line). Such transceivers require a power supply and in the preferred embodiment the transceiver is powered from the telecommunications network equipment (e.g. the Digital Subscriber Access Multiplexer or Multi-Service Access Node located at the serving local exchange or street cabinet). The transceiver is preferably embodied in a detachable front plate, allowing substitution of a conventional front plate by one incorporating the invention. The front plate may also incorporate a Subscriber Line Interface Circuit / Analogue Terminal Adaptor (SLIC/ATA) to provide an embedded voice capability, connected to a separate port suitable for connection of an analogue telephone.

An embodiment of the invention will now be described with reference to the drawings, in which
Figure 1 depicts a conventional network termination installation.
Figure 2 depicts the internal electrical connections within the front plate of the installation depicted in Figure 1.
Figure 3 is a perspective view of the conventional installation.
Figure 4 depicts the connections within a front plate according to the invention
Figure 5 is a perspective view of the front plate of Figure 4 in conjuction with a conventional back plate.

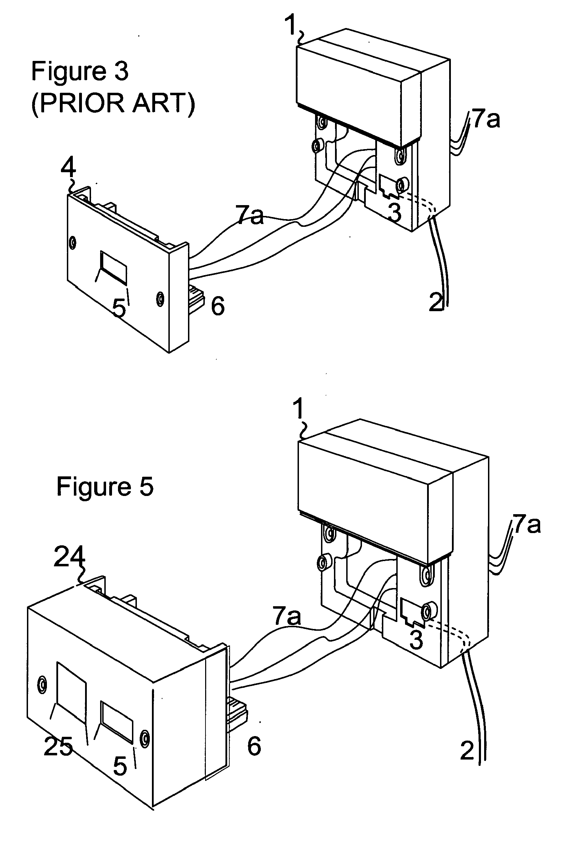

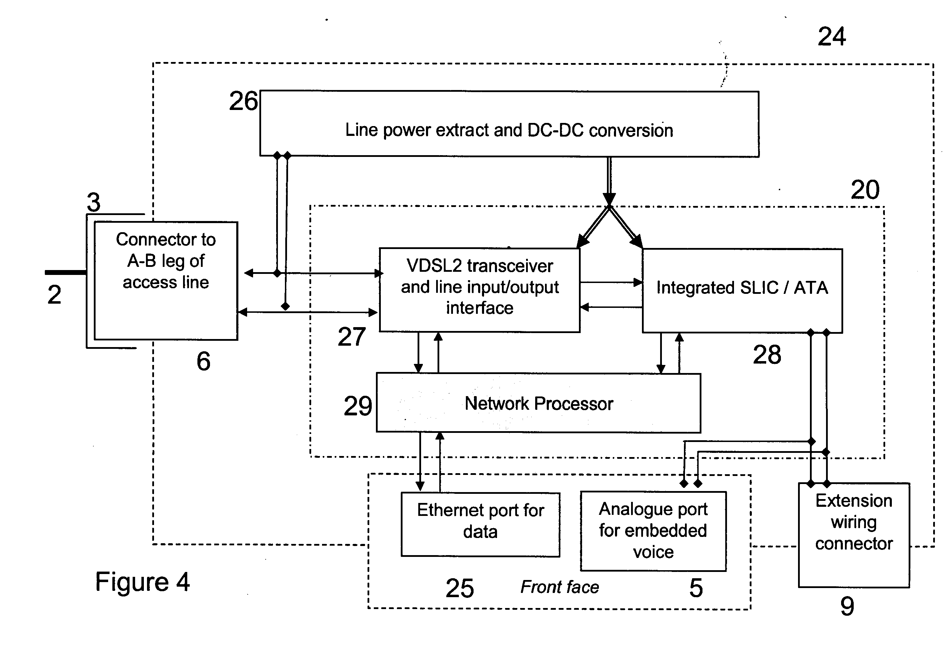

Figures 1, 2 and 3 have already been discussed. A front plate configured according to the invention is depicted in Figures 4 and 5. The modified front plate 24 has a connector 6 similar to that provided in the conventional front plate 4, for coupling to the back plate 1 and terminating a telecommunications line 2. The front face of the front plate 24 presents two user-accessible physical interfaces or "ports", namely one or more Ethernet (data) ports 25 and a telephony port 5. The telephony port 5 is configured to allow existing analogue equipment to be attached. This face plate therefore provides both digital and analogue services to the customer through a single termination 24. As in the prior art arrangement, an extension wiring connector 9 is provided to allow connection of extension sockets 8a, 8b, as already discussed with reference to Figure 1).

Additional ports, such as a second Ethernet port to allow connection of an additional terminal, may also be provided.

An integral VDSL transceiver 27 terminates the VDSL2 transmission signal carried over the network connection 2 from a Fibre to the Cabinet (FTTCab) or Street Multi Service Access Node (MSAN), forming a 2-100 Mbit/s bi-directional data transmission link between the MSAN line card port and the front plate 24. The data is forwarded to the Ethernet port 25.

The telephony or voice service to be delivered through the voice port 5 is provided as a derived voice signal embedded in the digital VDSL transmission system. This is extracted by the VDSL transceiver 27 and forwarded to an integrated SLIC/ATA component 28 (subscriber line interface circuit/analogue terminal adaptor) and forwarded to the analogue port 5 and any extension wiring 7a connected to the extension connector 9. The SLIC/ATA provides the functions required to drive an analogue phone. These functions include the generation of ringing current and off-hook current.

In the reverse direction, analogue traffic delivered to the analogue port 5 or extension connector 9 are processed by the SLIC/ATA 28 and forwarded to the VDSL transceiver 27, where it is combined with other data from the Ethernet port 25 for transmission into the network through the connector 6.

A network processor 29 is incorporated to manage the interactions between the functional blocks, which would preferably be integrated into a SOC (system on a chip) together with a significant number of the functions depicted in Figure 4 .

The total peak power requirement for the VDSL transceiver 27, SLIC/ATA 28, and network processor 29 would be 4W or less. The required power can be delivered over the wire-pair connection 2 from the network equipment (e.g. MSAN or DSLAM), using a DC power extraction circuit 26. This avoids the need to take power from the customer's own power supply The standard line feed (battery) voltage of 48V DC fed from the D-side Cabinet line 2 (similar to the voltage required to deliver ringing current on a conventional analogue line) would be sufficient to provide this power requirement to the majority of customer premises when served from a street cabinet MSAN. A line voltage of 75V DC at MSAN would be sufficient for approximately 95% of local loops. Such voltages can be derived from the 48V DC available at the Cabinet

A "System on a Chip" (SoC) solution may be used to integrate some components. The SOC can be arranged to power down parts that are not in use.

The components within the front plate 24 of the invention may require it to be larger than the standard prior art front plate 4. In order to allow it to be fitted to the standard back plate 1, it may be necessary for the novel front plate to project further from the back plate than is the case for the conventional front plate.

## Claims

1. A telecommunications network termination equipment forming the termination of a fixed network connection, the equipment comprising a connection for coupling to a telecommunications network and incorporating a transceiver for a data communications service, and a data port for connection to a data communications device.

2. A telecommunications network termination equipment according to claim 1, further comprising a subscriber line interface circuit and analogue terminal adaptor, and a port for connection of an analogue telecommunications device thereto.

3. A telecommunications network termination equipment according to claim 1 or claim 2, forming the detachable front plate of a wall-mounted network termination, and having cable connection means for connection through a network termination unit to the telecommunications network.

4. A telecommunications network termination equipment according to claim 1, claim 2 or claim 3, wherein the data port is an Ethernet port.

5. A telecommunications network termination equipment according to claim 1, claim 2, claim 3 or claim 4, further comprising a power management unit for taking a power supply from the telecommunications network and delivering power to the transceiver..
